(19)

**Europäisches Patentamt**
**European Patent Office**
**Office européen des brevets**

(11) **EP 4 661 092 A2**

(12) **EUROPEAN PATENT APPLICATION**

(43) Date of publication:
**10.12.2025 Bulletin 2025/50**

(21) Application number: **25169049.1**

(22) Date of filing: **08.04.2025**

(51) International Patent Classification (IPC):
*H01M 4/131* (2010.01)     *H01M 4/36* (2006.01)
*H01M 4/485* (2010.01)     *H01M 4/505* (2010.01)
*H01M 4/525* (2010.01)     *H01M 4/58* (2010.01)
*H01M 10/0525* (2010.01)     *H01M 4/02* (2006.01)

(52) Cooperative Patent Classification (CPC):
**H01M 4/364; H01M 4/131; H01M 4/485;**
**H01M 4/505; H01M 4/525; H01M 4/5825;**
**H01M 10/0525;** H01M 2004/028; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.04.2024 KR 20240054511**

(71) Applicant: **SAMSUNG SDI CO., LTD.**
**Yongin-si, Gyeonggi-do 17084 (KR)**

(72) Inventors:
• **KIM, Young-Ki**
**17084 Yongin-si (KR)**

• **CHOI, Aram**
**17084 Yongin-si (KR)**
• **KIM, Sangmi**
**17084 Yongin-si (KR)**
• **DOO, Sungwook**
**17084 Yongin-si (KR)**
• **KANG, Gwiwoon**
**17084 Yongin-si (KR)**
• **LEE, Soonrewl**
**17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE POSITIVE ELECTRODE ACTIVE MATERIAL, AND RECHARGEABLE LITHIUM BATTERY INCLUDING THE POSITIVE ELECTRODE ACTIVE MATERIAL**

(57)     A positive electrode active material for a rechargeable battery comprises: (1) first particles comprising a compound having an olivine structure, (2) second particles comprising a compound having a spinel structure, (3) third particles having a layered structure, and (4) fourth particles. An amount of the third particles is about 10 parts by weight to about 20 parts by weight based on 100 parts by weight of the positive electrode active material. Also disclosed are positive electrodes including the positive electrode active materials, and rechargeable lithium batteries including the positive electrode active materials.

FIG. 6

EP 4 661 092 A2

**Description**

BACKGROUND

The present invention relates to a positive electrode active material for a rechargeable lithium battery, a positive electrode including the positive electrode active material, and a rechargeable lithium battery including the positive electrode active material. More particularly, to a positive electrode active material including an olivine-based lithium compound, a positive electrode including the same, and a rechargeable lithium battery including the same.

With the rapid spread of devices that use batteries, such as mobile phones, laptop computers, and electric vehicles, the demand for rechargeable batteries with high energy density and high capacity is rapidly increasing. Accordingly, research and development has been conducted to improve the performance of rechargeable lithium batteries.

A rechargeable lithium battery is a battery including a positive electrode and a negative electrode containing active materials capable of intercalation and deintercalation of lithium ions, and an electrolyte. A rechargeable lithium battery produces electrical energy through the oxidation and reduction reactions when lithium ions are intercalated into and deintercalated from the positive electrode and negative electrode.

SUMMARY

The present invention provides a positive electrode active material that is economical and has high energy density and excellent lifetime characteristics.

The present invention also provides a rechargeable lithium battery that is economical and has high energy density and high efficiency.

According to a first aspect of the present invention there is provided a positive electrode active material comprising (i) first particles comprising a compound of Chemical Formula 1 and having an olivine structure, (ii) second particles comprising a compound of Chemical Formula 2 and having a spinel structure, (iii) third particles comprising a compound of Chemical Formula 3 and having a layered structure, and (iv) fourth particles comprising a compound of Chemical Formula 4. The amount of the third particles is about 10 parts by weight to about 20 parts by weight based on 100 parts by weight of the positive electrode active material.

Chemical Formula 1 $\quad$ : $Li_{a1}Fe_{x1}B_{y1}PO_{4-b1}$

In Chemical Formula 1, $0.8{\le}a1{\le}1.2$, $0.1{\le}x1{\le}1.0$, preferably $0.1{\le}x1{<}1.0$, $0.001{\le}y1{\le}0.05$, $0{\le}b1{\le}0.05$, $x1 + y1 = 1$, and B is at least one of Ti, Mg, V and Nb.

Chemical Formula 2 $\quad$ : $Li_{a2}Mn_{x2}Mg_{y2}O_{4-b2}$

In Chemical Formula 2, $0.8{\le}a2{\le}1.2$, $1.9{\le}x2{\le}2.05$, $0{\le}y2{\le}0.05$ (e.g., $0.001{\le}y2{\le}0.05$), and $0{\le}b2{\le}0.05$.

Chemical Formula 3 $\quad$ : $Li_{a3}Ni_{x3}Co_{y3}E_{z3}O_{2-b3}$

In Chemical Formula 3, $0.8{\le}a3{\le}1.2$, $0.9{\le}x3{\le}1.0$, $0{\le}y3{\le}0.1$, $0{\le}z3{\le}0.1$, $0{\le}b3{\le}0.05$, $x3 + y3 + z3 = 1$, and E is Al, Mn, or a combination of Al and Mn.

Chemical Formula 4 $\quad$ : $Li_{a4}Fe_{x4}D_{y4}O_{4-b4}$

In Chemical Formula 4, $4.9{\le}a4{\le}5.1$, $0.9{\le}x4{\le}1.05$, $0{\le}y4{\le}0.05$ (e.g., $0.001{\le}y4{\le}0.05$), $0{<}b4{\le}0.05$, and D is Al, Mg, or a combination of Al and Mg.

According to a second aspect of the present invention there is provided a positive electrode for a rechargeable lithium battery comprising a positive electrode current collector, and a positive electrode active material layer on the positive electrode current collector. The positive electrode active material layer comprises the aforementioned positive electrode active material, a conductive material, and a binder.

According to a third aspect of the invention there is provided a rechargeable lithium battery comprising the aforementioned positive electrode, a negative electrode comprising a negative electrode current collector and a negative electrode active material layer on the negative electrode current collector, and a separator between the positive electrode and the negative electrode.

At least some of the above and other features of the invention are set out in the claims.

BRIEF DESCRIPTION OF THE FIGURES

The accompanying drawings are included to provide a further understanding of the present disclosure and are incorporated in and constitute a part of this specification. The drawings illustrate embodiments of the present disclosure and, together with the description, serve to explain principles of the present disclosure.

FIG. 1 is a simplified conceptual diagram showing a rechargeable lithium battery according to some embodiments of the present disclosure.

FIGS. 2 to 5 are views schematically showing rechargeable lithium batteries according to some embodiments.

FIGS. 6 and 7 are enlarged views showing positive electrode active material layers of a rechargeable lithium battery according to some embodiments of the present disclosure.

FIGS. 8A and 8B are scanning electron microscope (SEM) images showing a positive electrode active material of Preparation Example 1 of the present disclosure.

FIGS. 8C and 8D are scanning electron microscope (SEM) images showing a positive electrode active material of Preparation Example 2 of the present disclosure.

FIGS. 9A and 9B are scanning electron microscope (SEM) images showing a positive electrode active material of Preparation Example 3 of the present disclosure.

FIGS. 10A and 10B are scanning electron microscope (SEM) images showing a positive electrode active material of Preparation Example 4 of the present disclosure.

FIG. 11 is a scanning electron microscope (SEM) image showing a positive electrode active material of Preparation Example 5 of the present disclosure.

DETAILED DESCRIPTION

In order to fully understand the configuration and effect of the present disclosure, embodiments of the present disclosure will be described in more detail with reference to the accompanying drawings. The present disclosure may, however, be embodied in one or more suitable forms and should not be construed as limited to one or more embodiments set forth herein, and one or more suitable changes and modifications can be made. The embodiments are provided so that this disclosure will be thorough and complete, and will fully convey the scope of the present disclosure to those skilled in the art to which the present disclosure pertains.

In this specification, it will be understood that, when an element is referred to as being on another element, the element may be directly on the other element or intervening elements may be present therebetween. In contrast, if an element is referred to as being directly on another element, no intervening elements are present therebetween.

In the drawings, thicknesses of components are exaggerated for clarity and to assist in explaining the technical contents. Like reference numerals and/or symbols refer to like elements throughout the specification, and duplicative descriptions thereof may not be provided.

Singular forms are intended to include the plural forms as well, unless the context clearly indicates otherwise. In addition, unless otherwise specially noted, the phrases "A or B" and "A and/or B" may indicate "A but not B", "B but not A", or "A and B". The terms "comprises/includes" and/or "comprising/including" used in this specification do not exclude the presence or addition of one or more other components.

In this specification, "combination thereof" may refer to a mixture, a stack, a composite, a copolymer, an alloy, a blend, and/or a reaction product of components.

Unless otherwise defined in this specification, a particle diameter may be an average particle diameter. Also, the particle diameter refers to an average particle diameter ($D_{50}$) which refers to a diameter of particles at a cumulative volume of about 50 vol% in a particle size distribution. The average particle diameter ($D_{50}$) may be measured by any suitable method, for example, may be measured by a particle size analyzer, or may be measured using a transmission electron microscope (TEM) image and/or a scanning electron microscope (SEM) image. In one or more embodiments, the average particle diameter is measured by a measuring device using dynamic light-scattering, wherein the number of particles is counted for each particle size range by performing data analysis, and an average particle diameter ($D_{50}$) value may then be obtained by calculation therefrom. Also, the average particle diameter may be measured using a laser diffraction method. When measured by the laser diffraction method, after dispersing particles to be measured in a dispersion medium, the dispersion medium is introduced into a commercial laser diffraction particle size measurement instrument (e.g., Micro-Trak MT-3000™) and irradiated with ultrasonic waves of about 28 kHz at an output of about 60 W, and the average particle diameter ($D_{50}$) based on about 50% of particle size distribution in the measurement instrument may then be calculated. In the present specification, when particles are spherical, "diameter" or "size" indicates a particle diameter, and when the particles are non-spherical, the "diameter" or "size" indicates a major axis length.

It will be understood that, although the terms first, second, etc. may be used herein to describe various elements, the elements are not limited by these terms. These terms are only used to distinguish one element from another element.

Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Numerical ranges recited herein include all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein and any minimum numerical limitation recited in this specification includes all higher numerical limitations subsumed therein. Accordingly, Applicant reserves the right to amend this specification, including the claims, to expressly recite any sub-range subsumed within the ranges expressly recited herein.

A person of ordinary skill in the art will appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

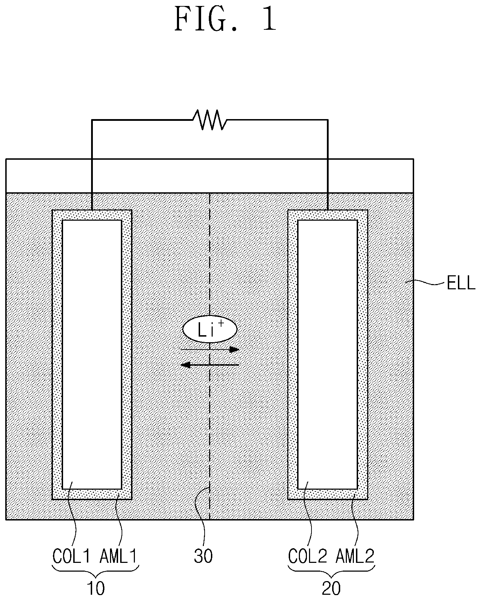

FIG. 1 is a simplified conceptual diagram showing a rechargeable lithium battery according to one or more embodiments of disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated with the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

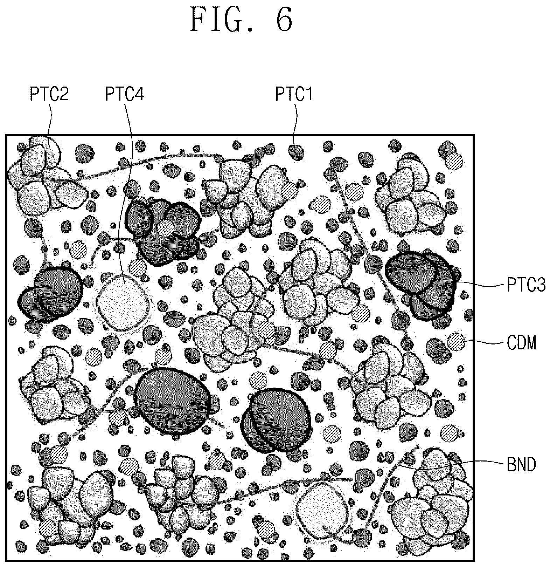

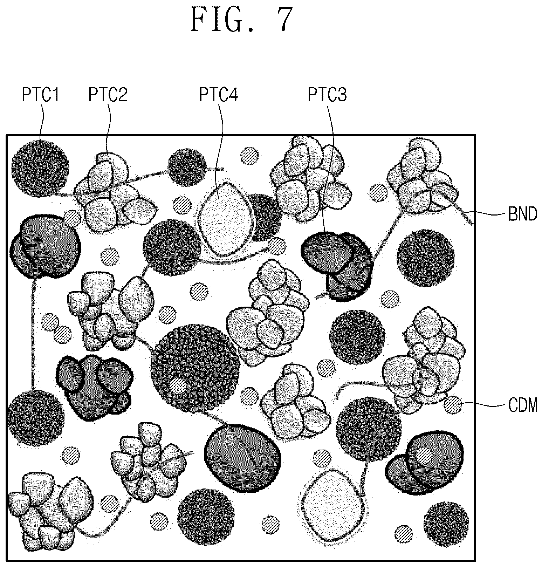

The positive electrode 10 for a rechargeable lithium battery includes a current collector COL1 and a positive electrode active material layer AML1 formed on the current collector COL1. The positive electrode active material layer AML1 includes a positive electrode active material and further includes a binder and a conductive material. The positive electrode active material layer AML1 according to one or more embodiments of the present disclosure will be described in more detail with reference to FIGS. 6 and 7. Aluminium (Al) may be used as the current collector COL1, but the present disclosure is not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g. an electrically conductive material).

The negative electrode active material layer AML2 may include, for example, about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other and also to attach the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly-amideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g. electrical conductivity) to the electrode. Any material that does not cause chemical change (e.g. does not cause an undesirable chemical change in the rechargeable lithium battery) and that conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, and/or a (e.g., any suitable) combination thereof. The crystalline carbon may be graphite such as non-shaped (e.g., randomly shaped), sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0 < y \leq 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particles (cores) in which primary silicon particles are assembled (agglomerated), and an amorphous carbon coating layer (shell) on the surfaces of the secondary particles. The amorphous carbon may also be between the primary silicon particles, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

## Separator 30

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film may be a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both (e.g., simultaneously) surfaces (e.g., opposite surfaces)) of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON®), and/or may be a copolymer and/or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination. But the present disclosure is not limited to these examples.

The organic material and the inorganic material may be mixed in one coating layer, or a coating layer including an organic material and a coating layer including an inorganic material may be stacked.

## Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based solvent, an ester-based solvent, an ether-based solvent, a ketone-based solvent, and/or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1: 1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato) borate (LiBOB).

**Rechargeable Lithium Battery**

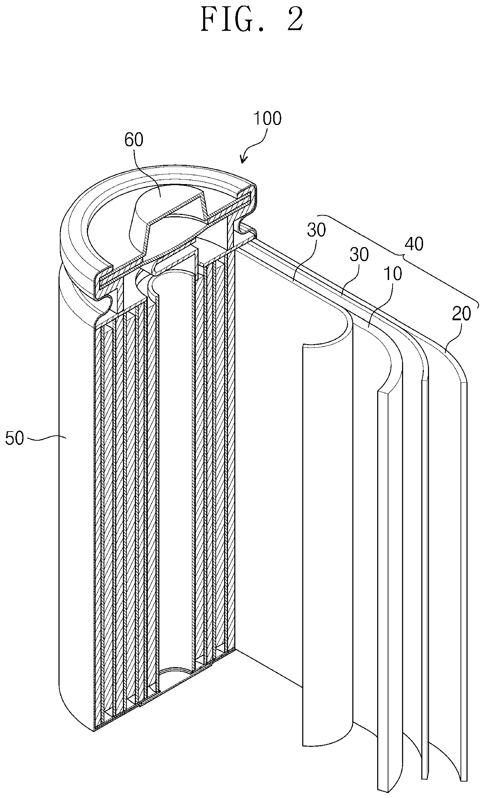

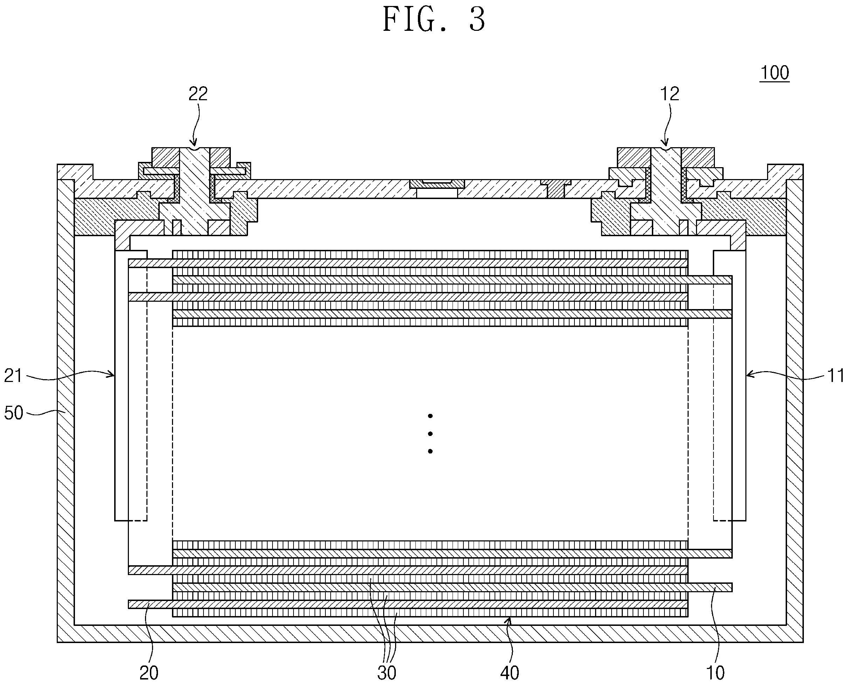

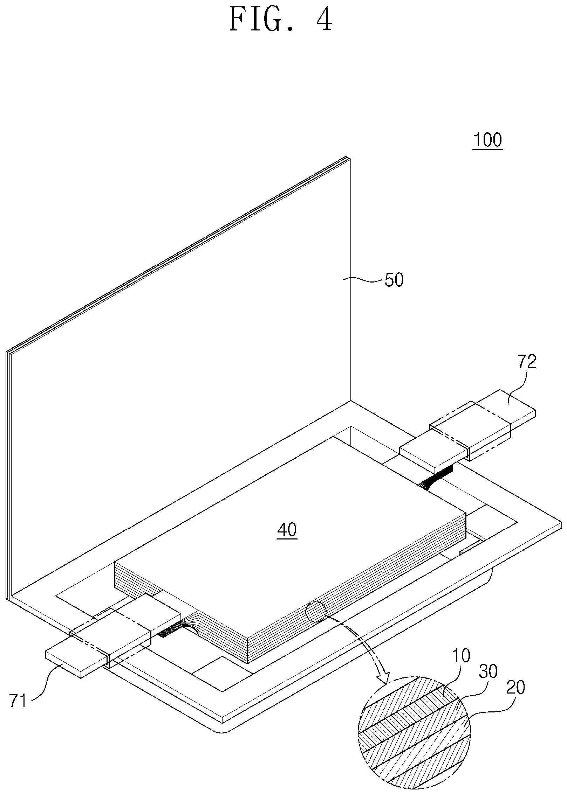

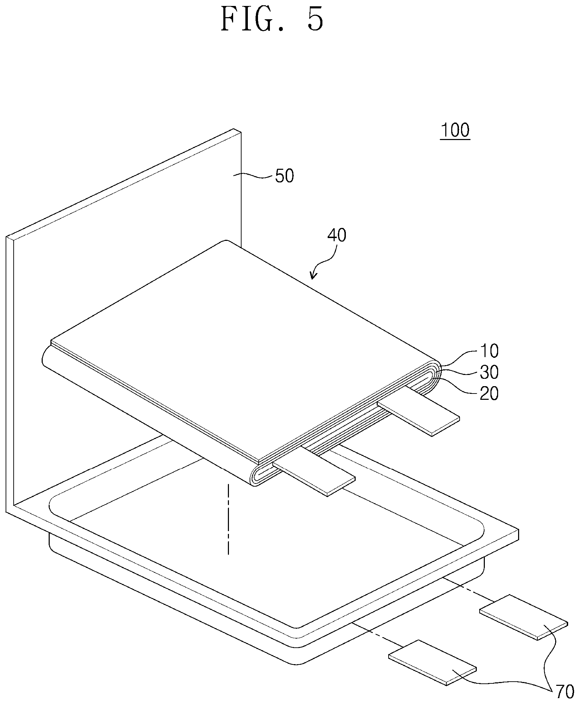

The rechargeable lithium battery may be classified into cylindrical, prismatic, pouch, or coin-type (kind) batteries, and/or the like depending on its shape. FIGS. 2 to 5 are schematic views illustrating a rechargeable lithium batteries according to embodiments. FIG. 2 shows a cylindrical battery, FIG. 3 shows a prismatic battery, and FIGS. 4 and 5 show pouch-type (kind) batteries. Referring to FIGS. 2 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. As shown in FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to outside of the battery.

The rechargeable lithium battery according to one or more embodiments may be used in automobiles, mobile phones, and/or one or more suitable types (kinds) of electric devices, as non-limiting examples.

FIGS. 6 and 7 are enlarged views of positive electrode active material layers of a rechargeable lithium battery according to some embodiments of the present disclosure. Referring to FIGS. 6 and 7 a positive electrode active material layer AML1 (see FIG. 1) includes a first particle PTC1, a second particle PTC2, a third particle PTC3, a fourth particle PTC4, a conductive material CDM, and a binder BND. A plurality of the first particles PTC1, a plurality of the second particles PTC2, a plurality of the third particles PTC3, and a plurality of fourth particles PTC4 constitute a positive electrode active material according to the present invention.

The positive electrode active material layer AML1 may further include an additive that serves as a sacrificial positive electrode.

The amount of the positive electrode active material (PTC1, PTC2, PTC3 and PTC4) in the positive electrode active material layer AML1 may range from about 90 wt% to about 99.5 wt% relative to 100 wt% of the positive electrode active material layer AML1. Each of the amounts of the binder BND and the conductive material CDM may be about 0.5 wt% to about 5 wt% relative to 100 wt% of the positive electrode active material layer AML1.

The binder BND may combine the first particles PTC1, the second particles PTC2, the third particles PTC3, the fourth particles PTC4 and the conductive material CDM with each other. For example, the binder BND may include at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon. But the present disclosure is not limited to these examples.

The conductive material CDM may be used to improve conductivity of the positive electrode active material layer AML1. Any conductive material that does not cause a chemical change of the positive electrode active material layer AML1 may be used. For example, the conductive material CDM may include: a carbon-based material such as natural graphite, artificial graphite, carbon black, acetylene black, Ketjen black, carbon fiber, carbon nano-fiber, and carbon nano-tube; a metal-based material containing copper, nickel, aluminium, silver or the like and having a metal powder or metal fiber form; a conductive polymer such as a polyphenylene derivative; or a mixture thereof.

Hereinafter, each of the first to the fourth particles PTC1, PTC2, PTC3 and PTC4 will be explained in more detail.

**First Particles**

The first particles PTC1 include a lithium compound with an olivine structure, represented by Chemical Formula 1:

$$Li_{a1}Fe_{x1}B_{y1}PO_{4-b1}$$

In Chemical Formula 1, 0.8≤a1≤1.2, 0.1≤x1≤1.0, preferably 0.1≤x1<1.0, 0.001≤y1≤0.05, 0≤b1≤0.05, and x1 + y1 = 1 are satisfied. B is at least one of Ti, Mg, V, and Nb and is a dopant doped in the first particle PTC1. The dopant B may control the size of primary particles to be uniform and thus may improve the charge and discharge efficiency, low-temperature properties and lifetime characteristics of a rechargeable lithium battery.

In an embodiment, the first particles PTC1 may include coating layers on the surfaces thereof. The coating layers may cover the entire surfaces of the first particles PTC1 or may cover portions of the surfaces of the first particles PTC1. The coating layers may include, for example, carbon and/or a carbon-containing compound. The first particles PTC1 may have improved structural stability and electrical conductivity due to the coating layers.

The coating layer may further include at least one of a titanium-containing compound, a magnesium-containing compound and a vanadium-containing compound. The metal-containing compound such as the titanium-containing compound, the magnesium-containing compound and the vanadium-containing compound may be, for example, a metal oxide, a metal hydroxide, a metal carbonate, a synthesized compound thereof or a mixture thereof. The metal-containing compound may further include other metal or non-metal elements. For example, the metal-containing compound may further include lithium.

The first particles PTC1 may further include carbon derived from the coating layers. The amount of carbon in each of the first particles PTC1 may be about 0.5 wt% to about 10 wt%, about 1 wt% to about 3 wt%, or about 1.5 wt% to about 2.5 wt%. The amount of carbon may be determined using an Elementar Micro Cube elemental analyzer. An example of a method of operation and conditions are as follows. A sample of about 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide is detected using a thermal conductivity detector (TCD). After detecting carbon dioxide ($CO_2$) using a TCD, the carbon content may be determined by converting the detected $CO_2$ amount into its corresponding carbon concentration. This conversion may be performed using a calibration curve established with standard reference materials of known carbon concentrations, ensuring an accurate correlation between detector response and carbon content. The carbon content may then be calculated using the following formula:

$$\text{Carbon Content}(\%) = \frac{\text{Mass of detected } CO_2 \times \text{Atomic weight of C}}{\text{Molecular weight of } CO_2 \times \text{Sample mass}} \times 100$$

The final carbon content can be expressed as a percentage of the total sample mass. If necessary, blank sample measurements can be used to correct for background signals, thereby improving accuracy.

Referring to FIG. 6 again, the first particles PTC1 may have a single particle form. In the description, a single particle may mean a sole particle that does not have a grain boundary inside of the particle. The single particle has a morphology phase, and may mean a, a monolith structure, a monolithic structure, or a non-agglomerated particle in which the particles exist as an independent phase that are not agglomerated. For example, the single particle may be a single crystal. In addition, the single particle may be a particle containing several crystals. The single particle may be a solely separated form.

The first particles PTC1 may be a positive electrode active material of a nano-type, i.e. of nanometer size, or micro-type, i.e. of micrometer size. The first particles PTC1 may include at least one first primary particle. As used herein, primary particles may be single particles, as in embodiments where the first or second particles are provided in a single particle form. Primary particles also may be particles that are combined to make a secondary particle form, for example, primary particles are agglomerated to form secondary particles. In embodiments, the first particles PTC1 may have spherical or elliptical shapes, in which first primary particles are agglomerated. In another embodiment, though the first primary particles may agglomerate, the first particles PTC1 may not have spherical shapes but instead may have random shapes.

The first particles PTC1 may be provided in various sizes. For example, the average diameter of the first particles PTC1 may be about 500 nm to about 2.5 μm, or about 1 μm. The minimum diameter of the first particles PTC1, that is, the size of the first primary particles, may be about 100 nm to about 500 nm, or about 200 nm to about 300 nm.

In an embodiment, the average diameter may be measured by a particle size analyzer. The average diameter may mean the diameter of particles at an accumulated volume of about 50 vol% ($D_{50}$) in particle size distribution.

In an embodiment, the minimum diameter, that is, the size of the first primary particles may mean a diameter measured by randomly selecting about 30 primary particles on an electron microscope image of the first particles PTC1.

Referring to FIG. 7 again, in embodiments the first particle PTC1 has a polycrystal form, and may include a secondary particle in which at least 2 or more first primary particles are agglomerated. In other words, one first particle PTC1 may include a plurality of first primary particles that are agglomerated with each other and thereby constitute a secondary particle. The first particle PTC1 may have spherical or elliptical shapes.

In embodiments, the first particles PTC1 may further include a grain boundary coating layer on the surface of each of the first primary particles. The grain boundary coating layers may be present in the first particles PTC1. The grain boundary coating layers may be formed along the interface between the first primary particles inside the first particle PTC1. In other words, the grain boundary coating layer may mean a material coated on the grain boundaries in the first particles PTC1. The grain boundary coating layers may include carbon and/or a carbon-containing compound. The grain boundary coating layers may further include at least one of a titanium-containing compound, a magnesium-containing compound and a vanadium-containing compound.

The interior of the first particles PTC1 may mean the entire interior of the first particles PTC1 excluding the surfaces of the first particles PTC1. For example, the interiors of the first particles PTC1 may mean entire interiors from a depth of about 10 nm from the surfaces of the first particle PTC1, or regions from a depth of about 10 nm to a depth of about 2 $\mu$m.

Since the first particles PTC1 further include the grain boundary coating part, structural stability may be reinforced, and uniform coating layers may be formed on the surfaces of the first particles PTC1. In addition, since the first particles PTC1 further includes the grain boundary coating parts, the electrical conductivity of the first particles PTC1 may be further improved.

The first particles PTC1 may further include carbon derived from the coating layers and/or grain boundary coating layers. The amount of carbon in the first particles PTC1 may be about 0.5 wt% to about 10 wt%, about 1 wt% to about 3 wt%, or about 1.5 wt% to about 2.5 wt%. The amount of carbon may be determined as described earlier in this specification.

If the first particles PTC1 are secondary particles, the average diameter of the first particles PTC1 may be about 2 $\mu$m to about 15 $\mu$m, about 3 $\mu$m to about 10 $\mu$m, or about 3 $\mu$m to about 7 $\mu$m. For example, the average diameter of the first particles PTC1 may be about 5 $\mu$m. In an embodiment, the average diameter may be measured using a particle size analyzer. The average diameter may mean the diameter ($D_{50}$) of particles at an accumulated volume of about 50 vol% in particle size distribution.

The average size (diameter) of the first primary particles may be about 200 nm or less. For example, the average size of the first primary particles may be about 10 nm to about 200 nm, about 20 nm to about 200 nm, about 50 nm to about 200 nm, or about 100 nm to about 200 nm. In an embodiment, the average particle size of the first primary particles may mean a diameter measured by randomly selecting about 30 primary particles on an electron microscope image on the positive electrode active material. The size of the first primary particles may be uniform.

If the first particles PTC1 have a polycrystal form, the size of the first primary particles may be smaller than a case where the first particles PTC1 have a single particle form. For example, the size of the first primary particles in a case where the first particles PTC1 are a polycrystal form may be about 100 nm smaller than a case where the first particles PTC1 are a single particle form.

If the average diameter of the first particles PTC1 and the average size of the first primary particles satisfy the above-described ranges, and if the size of the first primary particles is uniform, the charge and discharge capacity and capacity at low temperature of a rechargeable lithium battery including the particles may be improved.

The first particles PTC1 may have spherical shapes in which first primary particles with a nano-size are agglomerated. Since the first primary particles are closely agglomerated in the first particles PTC1, the particles may have the following properties. The first particles PTC1 may have spherical or elliptical shapes. The average diameter ($D_{50}$) of the first particles PTC1 may be about 2 $\mu$m to about 15 $\mu$m. The porosity of the first particles PTC1 may be about 20% to about 40%. Porosity may be defined as the pore volume divided by the total volume of a particle. The span value of the first particles PTC1 analyzed by a particle size analyzer may be about 0.3 to about 0.75.

**Second Particles**

The second particle PTC2 includes a lithium compound with a spinel structure, represented by Chemical Formula 2:

$$Li_{a2}Mn_{x2}Mg_{y2}O_{4-b2}$$

In Chemical Formula 2, $0.8 \leq a2 \leq 1.2$, $1.9 \leq x2 \leq 2.05$, $0 \leq y2 \leq 0.05$ (e.g., $0.001 \leq y2 \leq 0.05$), and $0 \leq b2 \leq 0.05$ are satisfied. Mg is a dopant doped in the second particles PTC2. Mg may control the size of primary particles to be uniform and thereby stabilize the crystal structure of the positive electrode active material and improve the charge and discharge efficiency, low-temperature properties, and lifetime characteristics of a rechargeable lithium battery. The second particles PTC2 may further include Al as a dopant in addition to Mg.

Referring to FIGS. 6 and 7 again, the second particles PTC2 may have a polycrystal form and may include secondary particles in which at least 2 or more second primary particles are agglomerated. In other words, one second particle PTC2 may include a plurality of second primary particles that are agglomerated with each other. The second particles PTC2 may have agglomerated spherical shapes of the second primary particles, and though the second primary particles agglomerate, the second particles PTC2 may have random shapes.

The average diameter of the second particles PTC2 may be about 3 $\mu$m to about 20 $\mu$m, about 4 $\mu$m to about 15 $\mu$m, or about 5 $\mu$m to about 10 $\mu$m. For example, the minimum diameter of the second particles PTC2 may be about 8 $\mu$m. In embodiments, the average diameter may be measured by a particle size analyzer. The average diameter may mean the diameter of particles at an accumulated volume of about 50 vol% ($D_{50}$) in particle size distribution.

The average size (diameter) of the second primary particles constituting the second particles PTC2 may be about 3 $\mu$m or less. For example, the average diameter of the second primary particles may be about 300 nm to about 3 $\mu$m, about 500 nm to about 3 $\mu$m, about 1 $\mu$m to about 3 $\mu$m, or about 2 $\mu$m to about 3 $\mu$m. In an embodiment, the average particle size of the second primary particles may mean a diameter measured by randomly selecting about 30 primary particles on an electron microscope image on the positive electrode active material. The size of the second primary particles may be uniform. The second primary particles may have a larger average size than the first primary particles. The difference of the average sizes between the second primary particles and the first primary particles may be about 300 nm or more.

The second particles PTC2 may include second coating layers on the surfaces of the particles. By including the second coating layers, the second particles PTC2 may effectively suppress structural collapse due to repeated charging and discharging.

The second coating layers may include a boron-containing compound, an aluminium-containing compound, or a combination of a boron-containing compound and an aluminium-containing compound. A metal-containing compound in each of the second coating layers may be, for example, a metal oxide, a metal hydroxide, a metal carbonate, a synthesized compound thereof, or a mixture thereof. The metal-containing compound may further include other metal or nonmetal elements. For example, the second coating layers may further include lithium, manganese, and/or nickel.

**Third Particles**

The third particles PTC3 include a lithium compound with a layered structure, represented by Chemical Formula 3:

$$Li_{a3}Ni_{x3}CO_{y3}E_{z3}O_{2-b3}$$

In Chemical Formula 3, $0.8 \leq a3 \leq 1.2$, $0.9 \leq x3 \leq 1.0$, $0 \leq y3 \leq 0.1$, $0 \leq z3 \leq 0.1$, $0 \leq b3 \leq 0.05$, $x3 + y3 + z3 = 1$, and E is Al, Mn or a combination of Al and Mn.

The third particles PTC3 may have a single particle form similar to the first particles PTC1. And the description of the single particles may be the same as or similar to the above description of the first particles PTC1. The third particles PTC3 may have a form composed of one single type of particle. In another embodiment, the third particles PTC3 may have a form in which a plurality of single particles are attached to each other, i.e., in the form of secondary particles. The positive electrode active material according to the present disclosure may include the third particles PTC3 in a single particle form, and the high capacity and high energy density of a rechargeable battery including the positive electrode active material may be accomplished.

In embodiments, the third particles PTC3 may include a third coating layer on surfaces thereof. By including the third coating layers, structural collapse due to repeated charging and discharging may be effectively suppressed. Accordingly, the lifetime characteristics of a rechargeable battery may be improved.

The third coating layers may include a boron-containing compound, an aluminium-containing compound, or a combination of a boron-containing compound and an aluminium-containing compound. The metal-containing compound in the third coating layers may be, for example, a metal oxide, a metal hydroxide, a metal carbonate, a synthesized compound thereof, or a mixture thereof. The metal-containing compound may further include other metal or nonmetal elements. For example, the third coating layers may further include lithium, manganese, and/or nickel.

A method for measuring the metal content in the third coating layers of the third particles PTC3 may include performing scanning electron microscopy-energy dispersive X-ray spectroscopy (SEM-EDS) on the third particles PTC3. Through the analysis, the boron and/or aluminium contents in the third coating layers may be confirmed. As a method for measuring the metal content in the third coating layers, an inductively coupled plasma-mass spectrometry (ICP-MS), an inductively coupled plasma optical emission spectroscopy (ICP-OES) or the like may be used in addition to the SEM-EDS.

The average diameter of the third particles PTC3 may be about 2 $\mu$m to about 15 $\mu$m, about 2 $\mu$m to about 10 $\mu$m, or about 2 $\mu$m to about 5 $\mu$m. The average diameter of the third particles PTC3 may be greater than the average diameter of the first particles PTC1.

In an embodiment, the average diameter of the third particles PTC3 may be obtained by measuring a diameter by randomly selecting about 30 third particles PTC3 in an electron microscope image of a positive electrode active material, and taking the diameter of particles at an accumulated volume of about 50 vol% ($D_{50}$) in particle size distribution as the average diameter.

In another embodiment of the present disclosure, the third particles PTC3 may have a secondary particle form in which primary particles are agglomerated. In this case, the third particles PTC3 may have granular or spherical shapes, and the average diameter of the third particles PTC3 may be about 10 $\mu$m to about 30 $\mu$m, about 10 $\mu$m to about 20 $\mu$m, or about 10 $\mu$m to about 15 $\mu$m.

In another embodiment of the present disclosure, the third particles PTC3 may be present in a mixture type of a compound in a single particle form and a compound in a secondary particle form.

### Fourth Particles

The fourth particles PTC4 include a lithium compound represented by Chemical Formula 4 :

$$Li_{a4}Fe_{x4}D_{y4}O_{4-b4}$$

In Chemical Formula 4, $4.9 \leq a4 \leq 5.1$, $0.9 \leq x4 \leq 1.05$, $0 \leq y4 \leq 0.05$ (e.g., $0.001 \leq y4 \leq 0.05$), $0 < b4 \leq 0.05$, and D is Al, Mg or a combination of Al and Mg.

The fourth particles PTC4 may have a single particle form like the above-described first particles PTC1. The description of the single particles may be the same as or similar to the explanation on the first particles PTC1 above. In an embodiment, the fourth particles PTC4 may have a form composed of one single type of particle. In another embodiment, the fourth particles PTC4 may have a form in which a plurality of single particles are attached to each other. The positive electrode active material according to the present disclosure includes the fourth particles PTC4 that function as a sacrificial positive electrode, and high energy density may thereby be accomplished.

In an embodiment, the fourth particles PTC4 may include fourth coating layers on the surfaces thereof. By including the fourth coating layers, structural collapse due to repeated charging and discharging may be effectively suppressed. Accordingly, the lifetime characteristics of a rechargeable battery may be improved.

The fourth coating layers may include a magnesium-containing compound, an aluminium-containing compound or a combination of a magnesium-containing compound and an aluminium-containing compound. The metal-containing compound in the fourth coating layers may be, for example, a metal oxide, a metal hydroxide, a metal carbonate, a synthesized compound thereof, or a mixture thereof. The metal-containing compound may further include other metal or non-metal elements. For example, the fourth coating layers may further include lithium, manganese and/or nickel.

The average diameter of the fourth particles PTC4 may be about 2 $\mu$m to about 15 $\mu$m, about 2 $\mu$m to about 10 $\mu$m, or about 3 $\mu$m to about 10 $\mu$m. The average diameter of the fourth particles PTC4 may be greater than the average diameter of the first particles PTC1. If the fourth particles PTC4 include a plurality of single particles, the average size of the single particles of the fourth particles PTC4 may be greater than the average diameter of the first particles PTC1.

In an embodiment, diameters may be measured by optionally selecting about 30 fourth particles PTC4 in an electron microscope image of the positive electrode active material, and the diameter of particles at an accumulated volume of about 50 vol% in particle size distribution may be taken as an average diameter ($D_{50}$).

The positive electrode active material may participate in the formation of a solid electrolyte interface (SEI) film on the surface of a negative electrode during charging and discharging. In particular, Li ions present in a positive electrode during initial charging reaction may induce an irreversible chemical physical reaction and may be converted to irreversible Li, which no longer participates in charge and discharge reactions. Accordingly, defects of reducing the capacity of the positive electrode active material may occur.

The fourth particles PTC4 according to embodiments of the present disclosure may include an oxide containing Fe and contain abundant Li, so the fourth particles PTC4 may serve as a sacrificial positive electrode that may compensate for irreversible Li. The fourth particles PTC4 may be decomposed in a formation process to provide Li and may not participate in subsequent charge and discharge processes. That is, the fourth particles are configured to be electrochemically inactive after a first cycle.

For example, if $Li_5FeO_4$ is the compound constituting the fourth particles PTC4, $Li_5FeO_4$ may be decomposed at between about 3.5 V and about 3.9 V, and four Li atoms may be provided in contrast to Li. If the fourth particles PTC4 are used in the amount range to be described below, of the fourth particles may effectively compensate for irreversible Li.

The fourth particles PTC4 according to embodiments of the present disclosure may include $Li_5FeO_4$ in combination with $LiFeO_2$ and/or $LiFe_5O_8$. For example, the fourth particles PTC4 may include $Li_5FeO_4$. Since $Li_5FeO_4$ can provide lots of Li atoms in a formation process, the $Li_5FeO_4$ may compensate for more irreversible Li. Accordingly, the effect of the sacrificial positive electrode may be achieved to a greater extent.

In embodiments, an amount of the fourth particles may be about 0.05 parts by weight to about 1.5 parts by weight based on 100 parts by weight of the positive electrode active material.

Referring to FIGS. 6 and 7 again, the positive electrode active material according to embodiments of the present disclosure will be explained in more detail. The first particles PTC1 and second particles PTC2 may constitute a main active material, and the amount of the main active material may be about 75 parts by weight to about 85 parts by weight, or about 80 parts by weight to about 90 parts by weight, based on 100 parts by weight of the positive electrode active material.

A lithium iron phosphate-based positive electrode active material (first particles PTC1) with an olivine crystal structure is relatively inexpensive compared to other positive electrode materials and has excellent stability and lifetime characteristics, but may have low energy density and may be difficult to use at a high voltage. A lithium manganese oxide-based positive electrode active material (second particles PTC2) with a spinel structure has a high operating voltage and excellent stability and is inexpensive, but like positive electrode active material with the first particles PTC1, may have a low energy density.

Since the first particles PTC1 and the second particles PTC2 are mixed and may be used as a main active material in the positive electrode active material according to the present disclosure, said positive electrode active material may be inexpensive and stable, and high operating voltage and excellent lifetime characteristics may be achieved. Relatively low energy density may be improved by including the third particles PTC3 that have excellent capacity and output characteristics. Further, by adding the fourth particles PTC4 that function as a sacrificial positive electrode, even higher capacity and density may be achieved.

The mixing ratio of the first particles PTC1 and the second particles PTC2 may be about 4:6 to about 6:4, or about 4.5:5.5 to about 5.5:4.5 based on weight. The Mn amount in the main active material that includes the first particles PTC1 and the second particles PTC2 may be about 40 mol% to about 70 mol%, about 50 mol% to about 70 mol%, or about 50 mol% to about 60 mol%. The Mn amount is similar to the manganese amount of a common lithium manganese iron phosphate (hereinafter, referred to as LMFP) positive electrode active material.

By appropriately mixing and using the first particles PTC1 and the second particles PTC2 so as to have the above manganese amount, a positive electrode active material that exhibits electrochemically similar properties to LMFP but is easier to manufacture and process than LMFP may be obtained. In this disclosure, the Mn amount in the main active material means the number of moles of Mn relative to the number of total moles of all metals in the total main active material including the first particles PTC1 and the second particles PTC2 excluding lithium and extremely small amounts of doped materials (for example, B of Chemical Formula 1 and Mg of Chemical Formula 2).

The amount of the third particles PTC3 may be about 10 parts by weight to about 20 parts by weight based on 100 parts by weight of the positive electrode active material. If the amount of the third particles PTC3 satisfy these ranges, the deterioration of the lifetime may be minimized, stability of the positive electrode active material may be maximized, and capacity properties may be improved.

The positive electrode active material of the present disclosure may improve mixture pellet density. In an embodiment, the pellet density of the positive electrode active material of the present disclosure may be about 2 g/cc to about 3 g/cc, or about 2.5 g/cc to about 2.8 g/cc, about 2.6 g/cc to about 2.8 g/cc, or about 2.6 g/cc to about 2.7 g/cc.

The rechargeable lithium battery including the positive electrode active material of the present disclosure may have an excellent average voltage. In an embodiment, the average voltage of the rechargeable lithium battery of the present disclosure may be about 3.2 V to about 4.5 V. For example, an operating voltage range may be about 3.5 V to about 3.7 V, or about 3.55 V to about 3.65 V. In addition, the energy density of the rechargeable lithium battery of the present disclosure may be about 450 Wh/kg to about 600 Wh/kg, about 500 Wh/kg to about 600 Wh/kg, or about 500 Wh/kg to about 550 Wh/kg.

The rechargeable lithium battery including the positive electrode active material of the present disclosure may have improved lifetime characteristics. In an embodiment, the rechargeable lithium battery of the present disclosure may have capacity retention of about 95% or more after charging and discharging 50 times with constant current of about 1.0C at the voltage. For example, the capacity retention may be about 98% to about 100%, or about 99% to about 100%.

Hereinafter, Examples of the present disclosure and Comparative Examples will be described. However, the Examples are only illustrations of the present disclosure, and the present disclosure is not limited to the Examples.

Preparation Example 1: Preparation of First Particles with Single Particle Form

A $Fe_1PO_4$ iron phosphate precursor, lithium carbonate, and titanium dioxide were mixed in a molar ratio of about 1:1.03:0.004. To the mixture, 10 wt% of glucose was added. A wet grinding process was performed by a ball milling of the mixture. The mixture was evaporated and dried in a heating furnace tray and put in a vacuum oven for drying at about 120 °C for about 4 hours. The dried mixture was baked under a nitrogen atmosphere at about 750 °C for about 10 hours. The baked product was ground to obtain first particles in a single particle form. The average size of the first particles was about 200 nm to about 300 nm.

**Preparation Example 2: Preparation of First Particles in Secondary Particle Form**

A $Fe_1PO_4$ iron phosphate precursor, lithium carbonate, and titanium dioxide were mixed in a molar ratio of about 1: 1.03:0.004. To the mixture, 10 wt% of glucose was added. A mixture that was a slurry was evaporated and dried by spray drying with a spray pressure of about 0.5 MPa at temperature conditions of about 230 °C. The dried mixture was baked under a nitrogen atmosphere at about 750 °C for about 10 hours to obtain first particles in a secondary particle form. The average size of the primary particles of the first particles in a secondary particle form was about 100 nm to about 200 nm.

**Preparation Example 3: Preparation of Second Particles in Secondary Particle Form**

In 100 ml of distilled water, 0.170 g of $MnSO_4H_2O$ and 0.228 g of $(NH_4)_2S_2O_8$ were dissolved, and sulfuric acid was added thereto to adjust the pH to 1, followed by reacting at about 130 °C for about 10 hours to obtain a solid precipitate. The precipitate thus obtained was washed with distilled water several times and dried at about 300 °C for about 3 hours to obtain $MnO_2$ as a solid having an average diameter of about 5 $\mu$m.

$Li_2CO_3$ and $MnO_2$ thereby synthesized were mixed so that the molar ratio of Li and Mn became about 1:2, and heated at about 600 °C for about 10 hours to synthesize $LiMn_2O_4$ particles having an average diameter of about 7 $\mu$m.

**Preparation Example 4: Preparation of Third Particles in Single Particle Form**

A high nickel-based precursor was prepared using a co-precipitation method. Particularly, nickel sulfate $(NiSO_4 \cdot 6H_2O)$, cobalt sulfate $(CoSO_4 \cdot 7H_2O)$ and manganese sulfate $(Mn(SO_4)_3 \cdot H_2O)$ in a molar ratio of about 93:5:2 as the raw materials of a nickel-based metal hydroxide were dissolved in distilled water as a solvent to prepare a metal raw material mixture. The metal raw material mixture, ammonia water, and sodium hydroxide were put in a reactor and reacted. A slurry solution in the reactor was filtered and washed with distilled water with high purity. The washed material was dried in a hot air oven with about 210 °C for about 24 hours to obtain a small size precursor $(Ni_{0.93}Co_{0.05}Mn_{0.02}(OH)_2)$ powder with an average diameter of about 4 $\mu$m.

A high nickel-based precursor and anhydrous lithium hydroxide (LiOH) were dry mixed using a Henschel mixer. The mixing was performed so that the molar ratio of lithium and a transition metal was about 1:1. As used herein, the transition metal means the total sum of transition metals (Ni+Co+Mn) contained in the high nickel-based precursor. A melting agent was added to the mixture and the mixture was heat treatment (i.e., baking process) under an oxygen atmosphere at about 750 °C for about 15 hours to synthesize third particles as the high nickel-based positive electrode active material. The third particles were ground using a Jet mill with a pressure of about 3 bars.

The third particles were added to distilled water and washed. Magnesium oxide and aluminium oxide corresponding to about 3 mol% based on the total sum of the transition metals of the third particles were added to perform magnesium and aluminium coating. The third particles were dried at about 150 °C for about 12 hours and heated (i.e., surface treated) under an oxygen atmosphere at about 700 °C for about 15 hours.

**Preparation Example** 5: **Preparation of Fourth Particles in** Single **Particle** Form

In order to prepare $Li_5FeO_4$, $LiOH \cdot H_2O$ and $Fe_2O_3$ were mixed in a ratio of Li:Fe = 5:1 to 6:1, then the mixed powder was milled using a spex mill for about 30 minutes and formed into a pellet with a pressure of about 6.1 to about 6.3 tons. The pellet was synthesized at about 850 °C for about 20 hours.

Preparation Example 6: Preparation of Main Active Material (A)

A main active material was prepared by mixing the first particles of Preparation Example 2 and the second particles of Preparation Example 3 in a weight ratio of about 46:54. In this case, the Mn amount in the main active material was about 67 mol%.

Preparation Example 7: Preparation of Main Active Material (B)

A main active material was prepared by mixing the first particles of Preparation Example 2 and the second particles of Preparation Example 3 in a weight ratio of about 55:45. In this case, the Mn amount in the main active material was about 59 mol%.

Example 1: Preparation of Final Positive Electrode Active Material

A positive electrode active material was prepared by mixing the main active material of Preparation Example 6, the third particles of Preparation Example 4, and the fourth particles of Preparation Example 5 in a weight ratio of about 79.6:19.9:0.5.

Example 2: Preparation of Final Positive Electrode Active Material

A positive electrode active material was prepared by mixing the main active material of Preparation Example 6, the third particles of Preparation Example 4, and the fourth particles of Preparation Example 5 in a weight ratio of about 79.2:19.8:1.

**Example 3: Preparation of Final Positive Electrode Active Material**

A positive electrode active material was prepared by mixing the main active material of Preparation Example 6, the third particles of Preparation Example 4, and the fourth particles of Preparation Example 5 in a weight ratio of about 78.8:19.7:1.5.

**Example 4: Preparation of Final Positive Electrode Active Material**

A positive electrode active material was prepared by mixing the main active material of Preparation Example 7, the third particles of Preparation Example 4, and the fourth particles of Preparation Example 5 in a weight ratio of about 79.6:19.9:0.5.

**Example 5: Preparation of Final Positive Electrode Active Material**

A positive electrode active material was prepared by mixing the main active material of Preparation Example 7, the third particles of Preparation Example 4, and the fourth particles of Preparation Example 5 in a weight ratio of about 79.2:19.8:1.

**Example 6: Preparation of Final Positive Electrode Active Material**

A positive electrode active material was prepared by mixing the main active material of Preparation Example 7, the third particles of Preparation Example 4, and the fourth particles of Preparation Example 5 in a weight ratio of about 78.8:19.7:1.5.

**Comparative Example 1**

A positive electrode active material was prepared by mixing the main active material of Preparation Example 6 and the third particles of Preparation Example 4 in a weight ratio of about 80:20. The fourth particles were excluded in this comparative example.

**Comparative Example 2**

A positive electrode active material was prepared by mixing the main active material of Preparation Example 6, the third particles of Preparation Example 4, and the fourth particles of Preparation Example 5 in a weight ratio of about 78.4:19.6:2.

**Comparative Example 3**

A positive electrode active material was prepared by mixing the main active material of Preparation Example 7 and the third particles of Preparation Example 4 in a weight ratio of about 80:20. The fourth particles were excluded in this comparative example.

**Comparative Example** 4

A positive electrode active material was prepared by mixing the main active material of Preparation Example 7, the third particles of Preparation Example 4, and the fourth particles of Preparation Example 5 in a weight ratio of about 78.4:19.6:2.

**Manufacture of Positive Electrode**

95 wt% of a final positive electrode active material, 3 wt% of a polyvinylidene fluoride binder and 2 wt% of a carbon black conductive material were mixed in an N-methylpyrrolidone solvent to prepare a positive electrode active material slurry. The positive electrode active material slurry was applied on an aluminium current collector, dried, and rolled to manufacture a positive electrode.

**Fabrication of Rechargeable Lithium Battery**

A 2032 type coin half-cell was formed using the positive electrode prepared and a lithium metal electrode as the counter electrode. A separator was a thickness of about 16 $\mu$m composed of a porous polyethylene (PE) film was disposed between the positive electrode and the lithium metal counter electrode, and an electrolyte solution was injected to fabricate a rechargeable lithium battery. As the electrolyte, an electrolyte solution obtained by mixing 1.3 M $LiPF_6$ with a mixture solvent of ethylene carbonate (EC), diethyl methyl carbonate (EMC) and dimethyl carbonate (DMC) in a volume ratio of about 3:4:3 was used.

**Evaluation Example 1: Analysis of the Surface of Positive Electrode Active Material**

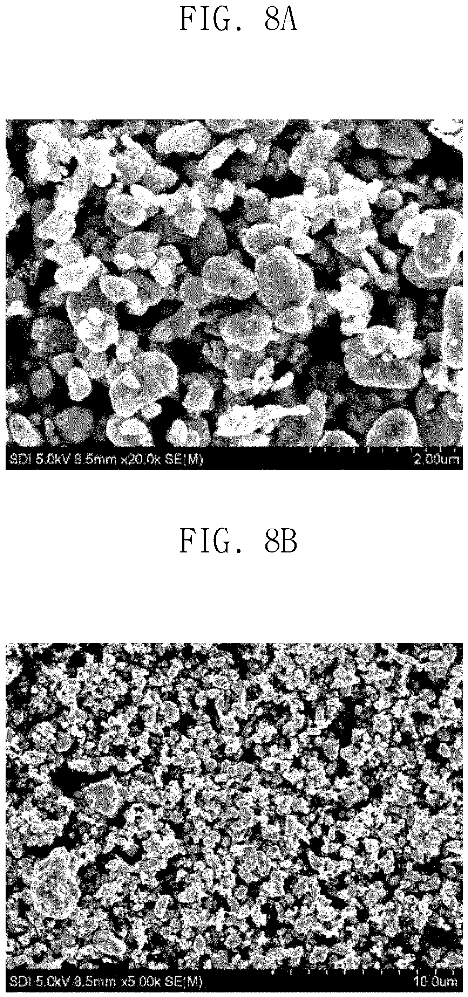

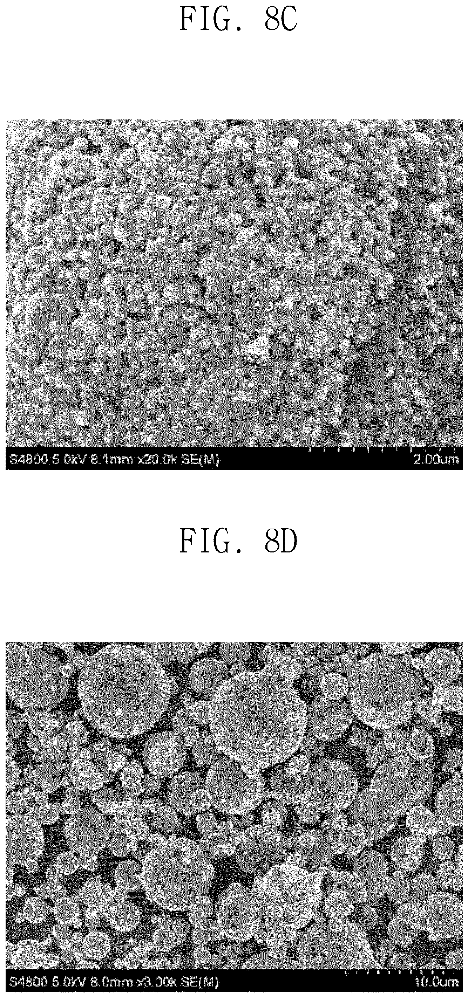

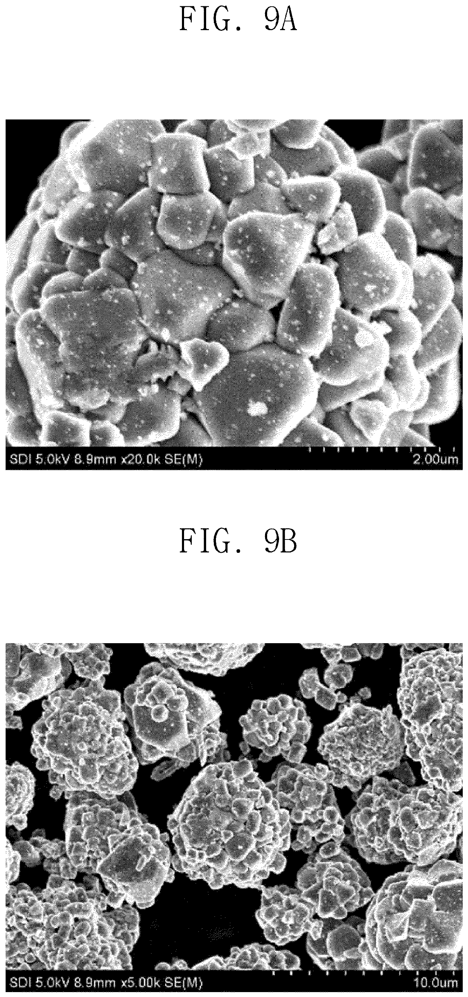

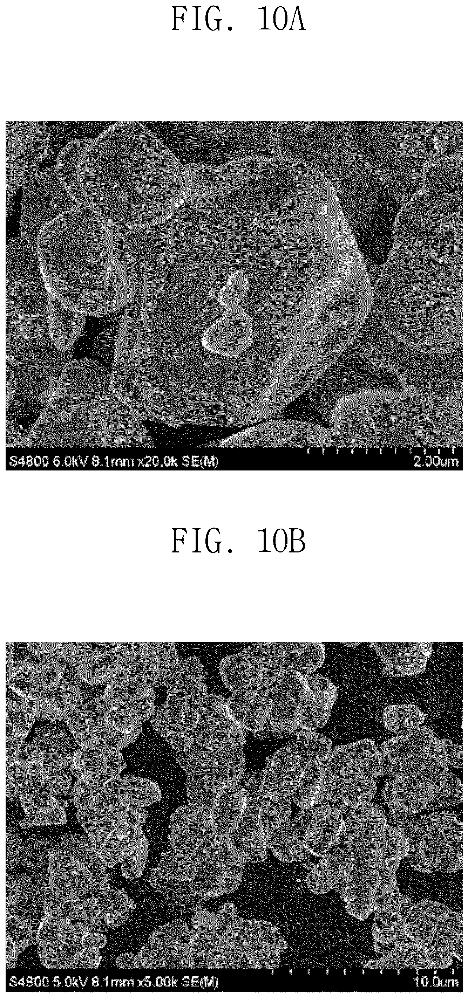

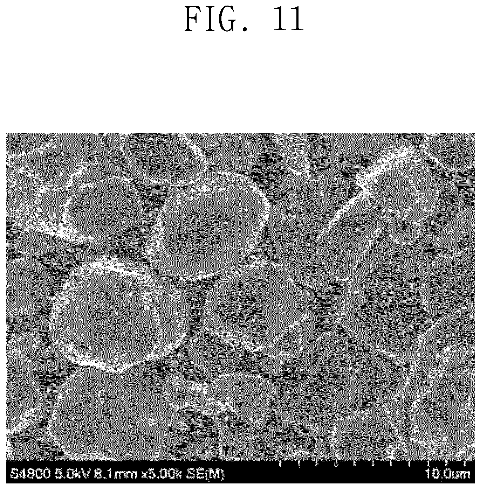

**Scanning electron** microscope (SEM) images of the first particles prepared in Preparation Examples 1 and 2 are shown in FIGS. 8A to 8D. SEM images of the second particles prepared in Preparation Example 3 are shown in FIGS. 9A and 9B. SEM images of the third particles prepared in Preparation Example 4 are shown in FIGS. 10A and 10B. An SEM image of the fourth particles prepared in Preparation Example 5 is shown in FIG. 11.
Referring to FIGS. 8A and 8B, it can be seen that the first particles according to Preparation Example 1 of the present disclosure have a fine single particle form with a nano-size. Referring to FIGS. 8C and 8D, it can be seen that the first particles according to Preparation Example 2 of the present disclosure have a spherical secondary particle form in which primary particles are agglomerated. It also can be seen that the primary particles of Preparation Example 2 have a small particle size and are uniform compared to the primary particles of Preparation Example 1.
Referring to FIGS. 9A and 9B, it can be seen that the second particles have a secondary particle form in which primary particles are agglomerated. Referring to FIGS. 10A and 10B, it can be seen that the third particles are single crystals or have a form in which a plurality of single particles are attached to each other. Referring to FIG. 11, it can be seen that the fourth particles also have a single particle form.

**Evaluation Example 2: Evaluation of Active Material**

The average pellet density (PD) of the positive electrode active materials of Examples 1 to 6 and Comparative Examples 1 to 4 are shown in Table 1. The average pellet density was measured by putting 3 grams of a positive electrode active material in a pellet mold and applying a force of about 4.0 U.S. tons for about 30 seconds.

Table 1

| | Mixing ratio (weight ratio) | | | | Powder |
|---|---|---|---|---|---|
| | First particles | Second particles | Third particles | Fourth particles | PD (g/cc) |
| Example 1 | 36.62% | 42.98% | 19.9% | 0.5% | 2.62 |
| Example 2 | 36.43% | 42.77% | 19.8% | 1.0% | 2.65 |
| Example 3 | 36.25% | 42.55% | 19.7% | 1.5% | 2.68 |
| Example 4 | 43.78% | 35.82% | 19.9% | 0.5% | 2.63 |
| Example 5 | 43.56% | 35.64% | 19.8% | 1.0% | 2.66 |
| Example 6 | 43.34% | 35.46% | 19.7% | 1.5% | 2.69 |
| Comparative Example 1 | 36.8% | 43.2% | 20% | 0% | 2.71 |
| Comparative Example 2 | 36.06% | 42.34% | 19.6% | 2.0% | 2.69 |
| Comparative Example 3 | 44% | 36% | 20% | 0% | 2.72 |
| Comparative Example 4 | 43.12% | 35.28% | 19.6% | 2.0% | 2.70 |

Referring to Table 1, it can be seen that the positive electrode active materials according to Examples 1 to 6 have similar average pellet density compared to the positive electrode active materials according to Comparative Examples 1 to 4.

**Evaluation Example 3: Evaluation of Battery Properties**

The properties of the rechargeable lithium batteries fabricated using the positive electrode active materials of Examples 1 to 6 and Comparative Examples 1 to 4 were evaluated.

Rechargeable lithium batteries were initially charged under constant current (about 0.2 C) and constant voltage (about 4.25 V) conditions, and after resting for about 10 minutes, discharged under constant current (about 0.2 C) conditions until about 2.5 V to carry out initial charging and discharging. Then, charging and discharging were repeated 50 times with about 0.2 C/0.2 C. The evaluation results of the battery properties are shown in Table 2 below.

Table 2

| | 4.25 V Charge amount (mAh/g) | 4.25 V Discharge amount (mAh/g) | 4.25 V Efficiency (%) | Average voltage (V) | 4.25 V Lifetime (%, 50cyc) | Energy density (Wh/kg) |
|---|---|---|---|---|---|---|
| Example 1 | 158.6 | 149.7 | 94.4 | 3.61 | 98.2 | 524 |
| Example 2 | 161.4 | 148.9 | 93.2 | 3.61 | 98.2 | 533 |
| Example 3 | 164.2 | 148.2 | 90.2 | 3.61 | 98.2 | 535 |
| Example 4 | 163.0 | 153.8 | 94.4 | 3.56 | 98.4 | 531 |
| Example 5 | 165.7 | 153.1 | 92.4 | 3.56 | 98.4 | 540 |
| Example 6 | 168.5 | 152.3 | 90.4 | 3.56 | 98.4 | 542 |
| Comparative Example 1 | 155.8 | 150.4 | 96.5 | 3.61 | 98.2 | 515 |
| Comparative Example 2 | 165.7 | 146.6 | 88.5 | 3.61 | 97.9 | 529 |
| Comparative Example 3 | 160.2 | 154.6 | 96.5 | 3.56 | 98.4 | 522 |
| Comparative Example 4 | 170.6 | 151.3 | 88.7 | 3.56 | 98 | 539 |

Referring to Table 2, it can be seen that the positive electrode active materials according to Examples 1 to 6 have similar average voltage and efficiency compared to the positive electrode active materials according to Comparative Examples 1 to 4. It can be seen that the positive electrode active materials according to Examples 1 to 6 have similar lifetime characteristics and markedly increased energy density compared to the positive electrode active materials according to Comparative Examples 1 to 4.

In cases of Examples 3 and 6, in which the amount of the sacrificial positive electrode was about 1.5 wt%, the efficiency of the batteries was about 90% that is lower than the efficiency of a negative electrode of about 91.5%, and it can be seen that there was no improvement in capacity.

In a positive electrode active material according to the present disclosure, olivine-based first particles and spinel-based second particles constitute a main active material, and by mixing layered third particles, capacity and energy density may be improved. Further, by including a small amount of fourth particles to serve as a sacrificial positive electrode, the capacity of the positive electrode active material may be further improved. The positive electrode active material according to the present disclosure may be economical and may have a high operating voltage and energy density.

Although embodiments of the present disclosure have been described, it is understood that the present disclosure is not be limited to these embodiments, but rather various changes and modifications can be made by one ordinary skilled in the art within the scope of the present disclosure.

Certain embodiments are set out in the following clauses:

Clause 1. A positive electrode active material as hereinbefore described and as claimed in the accompanying claims, wherein a pellet density of the positive electrode active material is about 2.6 g/cc to about 2.8 g/cc.

Clause 2. A positive electrode for a rechargeable lithium battery, the positive electrode comprising: a positive electrode current collector; and a positive electrode active material layer on the positive electrode current collector, wherein the positive electrode active material layer comprises: (1) a positive electrode active material as hereinbefore described, including in Clause 1, and as claimed in the accompanying claims, (2) a conductive material, and (3) a binder.

Clause 3. The positive electrode for a rechargeable lithium battery of Clause 2, wherein an amount of the binder is about 0.5 parts by weight to about 5 parts based on 100 parts by weight of the positive electrode active material layer.

Clause 4. The positive electrode for a rechargeable lithium battery of Clause 2 or Clause 3, wherein an amount of the conductive material is about 0.5 parts by weight to about 5 parts by weight based on 100 parts by weight of the positive electrode active material layer.

Clause 5. A rechargeable lithium battery, comprising: (1) the positive electrode according to any one of Clauses 2 to 4;

(2) a negative electrode comprising a negative electrode current collector and a negative electrode active material layer on the negative electrode current collector; and (3) a separator between the positive electrode and the negative electrode, wherein the negative electrode active material layer comprises a silicon-based active material.

**Claims**

1. A positive electrode active material comprising:

    first particles comprising a compound of Chemical Formula 1 and having an olivine structure;
    second particles comprising a compound of Chemical Formula 2 and having a spinel structure;
    third particles comprising a compound of Chemical Formula 3 and having a layered structure; and
    fourth particles comprising a compound of Chemical Formula 4,
    wherein an amount of the third particles is about 10 parts by weight to about 20 parts by weight based on 100 parts by weight of the positive electrode active material,
    wherein Chemical Formula 1 is:

$$Li_{a1}Fe_{x1}B_{y1}PO_{4-b1}$$

    with $0.8 \leq a1 \leq 1.2$, $0.1 \leq x1 \leq 1.0$, $0.001 \leq y1 \leq 0.05$, $0 \leq b1 \leq 0.05$, $x1 + y1 = 1$, and B is at least one of Ti, Mg, V and Nb,
    wherein Chemical Formula 2 is:

$$Li_{a2}Mn_{x2}Mg_{y2}O_{4-b2}$$

    with $0.8 \leq a2 \leq 1.2$, $1.9 \leq x2 \leq 2.05$, $0 \leq y2 \leq 0.05$, and $0 \leq b2 \leq 0.05$,
    wherein Chemical Formula 3 is:

$$Li_{a3}Ni_{x3}Co_{y3}E_{z3}O_{2-b3}$$

    with $0.8 \leq a3 \leq 1.2$, $0.9 \leq x3 \leq 1.0$, $0 \leq y3 \leq 0.1$, $0 \leq z3 \leq 0.1$, $0 \leq b3 \leq 0.05$, $x3 + y3 + z3 = 1$, and E is Al, Mn or a combination of Al and Mn, and
    wherein Chemical Formula 4 is:

$$Li_{a4}Fe_{x4}D_{y4}O_{4-b4}$$

    with $4.9 \leq a4 \leq 5.1$, $0.9 \leq x4 \leq 1.05$, $0 \leq y4 \leq 0.05$, $0 < b4 \leq 0.05$, and D is Al, Mg or a combination of Al and Mg.

2. The positive electrode active material of claim 1, wherein the fourth particles are configured to be electrochemically inactive after a first cycle in which the positive electrode active material is used.

3. The positive electrode active material of claim 1 or claim 2, wherein an amount of the fourth particles is about 0.05 parts by weight to about 1.5 parts by weight based on 100 parts by weight of the positive electrode active material.

4. The positive electrode active material of any preceding claim, wherein the first particles and the second particles constitute a main active material, and
    wherein an amount of the main active material is about 75 parts by weight to about 85 parts by weight based on 100 parts by weight of the positive electrode active material.

5. The positive electrode active material of claim 4, wherein an amount of Mn in the main active material is about 40 mol% to about 70 mol%.

6. The positive electrode active material of any preceding claim, wherein the first particles comprise first primary particles, and the second particles have a secondary particle form in which a plurality of second primary particles are agglomerated.

7. The positive electrode active material of claim 6, wherein an average diameter of the first primary particles is smaller than an average diameter of the second primary particles.

8. The positive electrode active material of claim 6 or claim 7, wherein the first particles have a single particle form, an average diameter of the first particles is about 0.5 $\mu$m to about 2.5 $\mu$m, and an average diameter of the first primary particles is about 200 nm to about 300 nm.

9. The positive electrode active material of claim 6 or claim 7, wherein first primary particles are agglomerated with each other, an average diameter of the first particles is about 3 $\mu$m to about 10 $\mu$m, and an average diameter of the first primary particles is about 100 nm to about 200 nm.

10. The positive electrode active material of any of claims 6 to 9, wherein an average diameter of the second primary particles is about 0.5 $\mu$m to about 3 $\mu$m.

11. The positive electrode active material of any preceding claim, wherein the first particles comprise coating layers containing carbon, and an amount of carbon in the first particles is about 1.5 wt% to about 2.5 wt%.

12. The positive electrode active material of any preceding claim, wherein the third particles have a single particle form, and an average diameter of the third particles is about 2 $\mu$m to about 5 $\mu$m.

13. The positive electrode active material of any preceding claim, wherein the third particles have a form in which a plurality of single particles are attached to each other, and an average diameter of the first particles is less than an average diameter of the single particles of the third particles that are attached to each other.

14. The positive electrode active material of any preceding claim, wherein the fourth particles have a single particle form.

15. The positive electrode active material of any preceding claim, wherein an average diameter of the fourth particles is about 3 $\mu$m to about 10 $\mu$m.

# FIG. 1

COL1 AML1    30    COL2 AML2

10              20

ELL

$Li^+$

# FIG. 2

FIG. 3

# FIG. 4

100

72

50

40

71

10
30
20

# FIG. 5

FIG. 6

# FIG. 7

# FIG. 8A

# FIG. 8B

# FIG. 8C

S4800 5.0kV 8.1mm x20.0k SE(M)        2.00um

# FIG. 8D

S4800 5.0kV 8.0mm x3.00k SE(M)        10.0um

# FIG. 9A

# FIG. 9B

# FIG. 10A

S4800 5.0kV 8.1mm x20.0k SE(M)          2.00um

# FIG. 10B

S4800 5.0kV 8.1mm x5.00k SE(M)          10.0um

# FIG. 11

S4800 5.0kV 8.1mm x5.00k SE(M)  10.0um